(19) Europäisches Patentamt
European Patent Office
Office européen des brevets

(11) **EP 3 677 850 B1**

(12) **EUROPEAN PATENT SPECIFICATION**

(45) Date of publication and mention
of the grant of the patent:
**03.05.2023 Bulletin 2023/18**

(21) Application number: **17923011.5**

(22) Date of filing: **03.11.2017**

(51) International Patent Classification (IPC):
**F24F 11/00** (2018.01)    **F24F 11/77** (2018.01)
**F24F 11/86** (2018.01)    F24F 110/10 (2018.01)
F24F 110/20 (2018.01)    F24F 140/20 (2018.01)

(52) Cooperative Patent Classification (CPC):
**F24F 11/77; F24F 11/86;** F24F 2110/10;
F24F 2110/20; F24F 2140/20; Y02B 30/70

(86) International application number:
**PCT/CN2017/109297**

(87) International publication number:
**WO 2019/041540 (07.03.2019 Gazette 2019/10)**

(54) **CONTROL METHOD AND APPARATUS FOR SELF-CLEANING OF AIR CONDITIONER, AND AIR CONDITIONER**

STEUERUNGSVERFAHREN UND -VORRICHTUNG ZUR SELBSTREINIGUNG VON KLIMAANLAGEN UND KLIMAANLAGE

PROCÉDÉ ET APPAREIL DE COMMANDE POUR AUTO-NETTOYAGE DE CLIMATISEUR, ET CLIMATISEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.09.2017 CN 201710787690**
**04.09.2017 CN 201710787684**

(43) Date of publication of application:
**08.07.2020 Bulletin 2020/28**

(73) Proprietors:
• **Haier Group Corporation**
**Qingdao, Shandong 266101 (CN)**
• **Qingdao Haier Air Conditioner General Corp., Ltd.**
**Qingdao, Shandong 266101 (CN)**

(72) Inventors:
• **WANG, Fei**
**Qingdao**
**Shandong 266101 (CN)**
• **FU, Yu**
**Qingdao**
**Shandong 266101 (CN)**
• **ZHANG, Lizhi**
**Qingdao**
**Shandong 266101 (CN)**
• **XU, Wenming**
**Qingdao**
**Shandong 266101 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
**EP-A1- 0 893 657       EP-A1- 3 059 515**
**CN-A- 1 482 408       CN-A- 1 519 515**
**CN-A- 102 072 548       CN-A- 104 969 010**
**CN-A- 106 123 219       CN-A- 106 610 089**
**CN-A- 107 621 049       CN-A- 107 621 050**
**GB-A- 2 516 336       JP-A- 2004 239 609**
**JP-A- 2006 329 471       US-A1- 2017 153 037**

EP 3 677 850 B1

**Description**

**TECHNICAL FIELD**

The present invention relates to the field of air conditioner technologies, and more particularly, to a method and a device for controlling an air conditioner, and an air conditioner.

**BACKGROUND**

Cooling capacity of air conditioners is divided into sensible heat and latent heat, wherein the sensible heat mainly affects an indoor temperature, and the latent heat mainly affects an indoor humidity, therefore, both sensible heat and latent heat will affect comfort. How to control the indoor temperature and humidity to satisfy users' better experience is a problem that has been widely concerned.

Prior art discloses a time-sharing temperature and humidity control method for an air conditioner, including: determining whether an indoor humidity is higher than a specified humidity of the air conditioner; if the indoor humidity is higher than the specified humidity of the air conditioner, driving the air conditioner to perform dehumidification; and if the indoor humidity is not higher than the specified humidity of the air conditioner, driving the air conditioner to perform cooling. Specifically, the if the indoor humidity is higher than the specified humidity of the air conditioner, driving the air conditioner to perform dehumidification includes: if the indoor humidity is higher than the specified humidity of the air conditioner, determining whether an indoor temperature is higher than a specified temperature of the air conditioner; if the indoor temperature is not higher than the specified temperature of the air conditioner, driving the air conditioner to separately perform dehumidification; and if the indoor temperature is higher than the specified temperature of the air conditioner, determining whether the indoor temperature is t1 degrees higher than the specified temperature of the air conditioner, where $1.5 \leq t1 \leq 3$; if the indoor temperature is t1 degrees higher than the specified temperature of the air conditioner, improving a frequency of a compressor of the air conditioner; and if the indoor temperature is not t1 degrees higher than the specified temperature of the air conditioner, improving the frequency of the compressor of the air conditioner after reducing a rotational speed of a fan of the compressor. Although the prior art discloses that the indoor temperature and humidity can be kept by a time-sharing temperature and humidity control method, the method only discloses that the frequency of the compressor of the air conditioner is improved when the indoor temperature is higher than the specified temperature of the

air conditioner; and if the indoor temperature is not higher than the specified temperature of the air conditioner, the frequency of the compressor of the air conditioner is improved after reducing the rotational speed of the fan of the compressor. According to the disclosure of the prior art, a person skilled in the art cannot think of a more specific and detailed method for adjusting the frequency of the compressor and the rotational speed of the fan.

The prior art further discloses a method for controlling temperature and humidity, including: b. calculating an operating time when the air conditioner is in a cooling mode; when the operating time reaches a preset threshold, determining whether an operating frequency of the compressor needs to be limited at present and whether a rotational speed of an indoor fan needs to be adjusted according to following conditions: b1. if a difference between a current indoor temperature and a preset temperature is greater than or equal to 2°C, the operating frequency of the compressor is not limited, and a current rotational speed of the indoor fan is not adjusted; b2. if the difference between the current indoor temperature and the preset temperature is greater than or equal to 1°C and less than 2°C, the operating frequency of the compressor is not limited, and the rotational speed of the indoor fan is reduced to a gear lower than the current rotational speed of the indoor fan, and the lowest rotational speed is a low gear; b3. if the difference between the current indoor temperature and the preset temperature is less than 1°C and a current indoor relative humidity is greater than or equal to 70%, the operating frequency of the compressor is not limited, and the rotational speed of the indoor fan is reduced to a maximum of two gears lower than the current rotational speed of the indoor fan, and the lowest rotational speed is the low gear; b4. if the difference between the current indoor temperature and the preset temperature is less than 1°C and the current indoor relative humidity is less than 70%, the operating frequency of the compressor is limited, and meanwhile and the rotational speed of the indoor fan is reduced to the maximum of two gears lower than the current rotational speed of the indoor fan, and the lowest rotational speed is the low gear. Although the prior art discloses that a relatively specific method for adjusting the frequency of the compressor and the rotational speed of the fan, that is, the operating frequency is limited or the gear of a wind speed is adjusted under certain conditions, a limitation of the frequency only limits the operating frequency of the compressor to a fixed value, and the wind speed is simply divided into four gears. It can be seen that the adjustment process of the operating frequency of the compressor and wind speed is not fine.

JP2006329471A discloses an air conditioning system 1 comprising a humidity conditioner 10 and an air conditioner 20 to the same indoor space. Control means 41, 42 calculate a dew point temperature calculated on the basis of target temperature Ts and target humidity Rs input to an input portion 30, and set a base temperature. The control means 41, 42 controls an evaporation temperature for controlling the operation of the air conditioner 20 to adjust a refrigerant evaporation temperature in a refrigerant circuit 60 to be higher than the base temperature.

CN104969010A discloses an air conditioner provided with a control device (10) which controls the rotational speed of a compressor (1) according to air conditioning operation and which controls the drive of an indoor fan (7) according to the rotational speed of the compressor (1); a temperature detector (14) which detects the temperature of an indoor heat exchanger (6); and a humidity detector (13) which detects indoor humidity. When performing dehumidification operation, the control device (10) performs correction control which, in order that the temperature of the indoor heat exchanger (6) is the dew point temperature at which humidity is lower than the detected indoor humidity, reduces the air blowing capacity of the indoor fan (7) by reducing the rotational speed thereof. Consequently, the temperature of the indoor heat exchanger is reduced while the dehumidification capacity is maintained, and as a result, dehumidification is capable of being performed while minimizing a reduction in indoor temperature.

## SUMMARY

Embodiments of the present disclosure provide a method and a device for controlling an air conditioner, and an air conditioner, and provide a more refined method for controlling a frequency of a compressor of the air conditioner and a rotational speed of a fan of the air conditioner, so as to improve the effects of temperature and humidity double control, thereby improving user experience. In order to basically understand some aspects of the disclosed embodiments, a brief summary is given below. The summary is not a general comment, nor tends to determine key/critical constituent elements or describe a protection scope of these embodiments, and only aims to present some concepts in a simplified form as an introduction of the following detailed description.

According to a first aspect of the embodiments of the present disclosure, there is provided a method for controlling an air conditioner according to claim 1.

Optionally, the controlling the operating frequency F of the compressor according to the temperature Tpn of the indoor coil includes: calculating and adjusting the operating frequency F of the compressor according to a temperature difference PT between the temperature Tpn of the indoor coil and a target temperature Tpm of the indoor coil and a temperature change DT of the indoor coil.

Optionally, $F=T\_Kp \times PT + T\_Ki \times DT$; where $PT=Tpn-Tpm$, $DT=Tpn-Tpn1$, Tpn1 is a temperature of the indoor coil collected last time, and $T\_Kp$ and $T\_Ki$ are weighting coefficients respectively.

Optionally, a selection of $T\_Ki$ is related to a system configuration and an external environment temperature, and a selection of $T\_Kp$ is related to the system configuration and the external environment temperature. A value range of $T\_Ki$ is 1 to 10, and a value range of $T\_Kp$ is 1 to 8. Preferably, $T\_Ki=3, 4, 5, 6$ or 7, and $T\_Kp=3, 4, 5, 6$ or 7.

Optionally, the controlling the operating frequency F of the compressor according to the indoor humidity RH includes: calculating and adjusting the operating frequency F of the compressor according to a humidity difference $\Delta RH$ between the indoor humidity RH and a target humidity RH_Target and a change $\Delta RH'$ of the indoor humidity.

Optionally, a preferred value of the target humidity RH Target is 52%.

Optionally, a selection of $RH\_Ki$ is related to the system configuration and the external environment temperature, and the selection of $RH\_Kp$ is related to the system configuration and the external environment temperature. A value range of $RH\_Ki$ is 1 to 10, and a value range of $RH\_Kp$ is 1 to 8. Preferably, $RH\_Ki=2, 3, 4, 5, 6$ or 7, and $RH\_Kp=2, 3, 4, 5, 6$ or 7.

Optionally, when a calculated operating frequency F is greater than a specified upper limit value, the operating frequency F of the compressor is set to the upper limit value; and when the calculated operating frequency F is less than a specified lower limit value, the operating frequency F of the compressor is set to the lower limit value, thereby ensuring the operation efficiency of the air conditioner, and extending the service life of the compressor of the air conditioner.

Optionally, the adjusting the rotational speed R of the indoor fan according to the operating frequency F of the compressor includes: the higher the frequency of the compressor, the higher the rotational speed R of the indoor fan.

Optionally, the target humidity range (RH1, RH2) is associated with the specified temperature T.

Optionally, when the temperature difference $\Delta t$ between the indoor temperature t and the specified temperature T is less than the second specified temperature difference $\Delta T2$ and the indoor humidity RH is within the target humidity range (RH1, RH2), the rotational speed R of the indoor fan and the operating frequency F of the compressor are kept unchanged.

Optionally, when the temperature difference $\Delta t$ between the indoor temperature t and the specified temperature T is greater than or equal to the second specified temperature difference $\Delta T2$ and less than a first specified temperature difference $\Delta T1$, adjusting the operating frequency F of the compressor to a specified frequency f1.

Optionally, the specified frequency f1 is 70% of the highest frequency of the compressor.

Optionally, when the temperature difference $\Delta t$ is greater than or equal to the first specified temperature difference $\Delta T1$, the operating frequency F of the compressor and/or the rotational speed R of the indoor fan are improved to reduce the indoor temperature.

According to a second aspect of the embodiments of the present disclosure, there is provided a device for controlling an air conditioner according to claim 7.

Optionally, the MCU further includes a first calculation unit configured to calculate the operating frequency F of the compressor according to a temperature difference PT between the temperature Tpn of the indoor coil and a target temperature Tpm of the indoor coil and a temperature change DT of the indoor coil; and the adjustment unit is configured to adjust the operating frequency F of the compressor according to a calculation result of the first calculation unit.

Optionally, PT=Tpn-Tpm, DT=Tpn- Tpn 1; Tpn1 is a temperature of the indoor coil collected last time, and T_Kp and T_Ki are weighting coefficients respectively.

Optionally, a selection of T_Ki is related to a system configuration and an external environment temperature, and a selection of T_Kp is related to the system configuration and the external environment temperature. A value range of T_Ki is 1 to 10, and a value range of T_Kp is 1 to 8. Preferably, T_Ki=3, 4, 5, 6 or 7, and T_Kp=3, 4, 5, 6 or 7.

Optionally, the MCU further includes a second calculation unit configured to calculate the operating frequency F of the compressor according to a humidity difference ΔRH between the indoor humidity RH and a target humidity RH_Target and a change ΔRH' of the indoor humidity; and the adjustment unit is configured to adjust the operating frequency F of the compressor according to a calculation result of the second calculation unit.

Optionally, a preferred value of the target humidity RH Target is 52%.

Optionally, a selection of RH_Ki is related to the system configuration and the external environment temperature, and the selection of RH_Kp is related to the system configuration and the external environment temperature. A value range of RH_Ki is 1 to 10, and a value range of RH_Kp is 1 to 8. Preferably, RH_Ki=2, 3, 4, 5, 6 or 7, and RH_Kp=2, 3, 4, 5, 6 or 7.

Optionally, when a calculated operating frequency F is greater than a specified upper limit value, the operating frequency F of the compressor is set to the upper limit value; and when the calculated operating frequency F is less than a specified lower limit value, the operating frequency F of the compressor is set to the lower limit value; therefore, the operation efficiency of the air conditioner is ensured, and the service life of the compressor of the air conditioner is extended.

Optionally, the adjusting the rotational speed R of the indoor fan according to the operating frequency F of the compressor includes: the higher the frequency of the compressor, the higher the rotational speed R of the indoor fan.

Optionally, when the temperature difference Δt between the indoor temperature t and the specified temperature T is less than the second specified temperature difference ΔT2 and the indoor humidity RH is within the target humidity range (RH1, RH2), the rotational speed R of the indoor fan and the operating frequency F of the compressor are kept unchanged.

Optionally, the adjustment unit is further configured to, when the temperature difference Δt between the indoor temperature t and the specified temperature T is greater than or equal to the second specified temperature difference ΔT2 and less than a first specified temperature difference ΔT1, adjust the operating frequency F of the compressor to a specified frequency f1.

Optionally, the specified frequency f1 is 70% of the highest frequency of the compressor.

Optionally, the adjustment unit is further configured to, when the temperature difference Δt is greater than or equal to the first specified temperature difference ΔT1, improve the operating frequency F of the compressor and/or the rotational speed R of the indoor fan to reduce the indoor temperature.

According to a third aspect of the embodiments of the present disclosure, there is provided an air conditioner including a compressor and an indoor fan, and further including any of the foregoing devices.

The technical solution provided by the embodiments of the present disclosure may include following beneficial effects:

there is provided a more refined method for controlling a frequency of a compressor of the air conditioner and a rotational speed of a fan of the air conditioner, when the air conditioner is in a cooling mode, the indoor temperature and the indoor humidity are collected, whether an operation state of the air conditioner needs to be adjusted is determined, the operating frequency of the compressor is adjusted according to the temperature of the indoor coil or the indoor humidity, and further the rotational speed of the indoor fan is adjusted, so that the indoor humidity and the indoor temperature are both within a specified target range, thereby effectively controlling a ratio of latent heat/sensible heat, improving the effects of temperature and humidity double control, and improving the user experience.

It should be understood that both the foregoing general description and the following detailed description are exemplary and explanatory only and are not intended to limit the present disclosure.

## BRIEF DESCRIPTION OF THE DRAWINGS

The accompanying drawings, which are incorporated in and constitute a part of this description, illustrate embodiments consistent with the present disclosure and, together with the description, serve to explain the principles of the present disclosure.

Fig. 1 is a flowchart illustrating a method for controlling an air conditioner according to an exemplary embodiment.

Fig. 2 is a flowchart illustrating a method for controlling an air conditioner according to an exemplary embodiment.

Fig. 3 is a flowchart illustrating a method for controlling an air conditioner according to an exemplary embodiment.

Fig. 4 is a flowchart illustrating a method for controlling an air conditioner according to an exemplary embodiment.

Fig. 5 is a structural block diagram illustrating a device for controlling an air conditioner according to an exemplary embodiment.

Fig. 6 is a structural block diagram illustrating a device for controlling an air conditioner according to an exemplary embodiment.

Fig. 7 is a structural block diagram illustrating a device for controlling an air conditioner according to an exemplary embodiment.

## DETAILED DESCRIPTION

The following description and accompanying drawings fully illustrate the specific implementation solutions of the present disclosure so that a person skilled in the art can practice them. The embodiments merely represent possible changes. Unless otherwise specified explicitly, the individual component and function are optional and the operation sequence may be changed. Parts and characteristics of some implementation solutions may be included in or replace parts and characteristics of other implementation solutions. The scope of the implementation solutions of the present disclosure includes the whole scope of the claims.

Cooling capacity of air conditioners is divided into sensible heat and latent heat, wherein the sensible heat mainly affects an indoor temperature, and the latent heat mainly affects an indoor humidity, therefore, both sensible heat and latent heat will affect comfort. When a temperature difference of a room is large, it is hoped that the temperature of the room will be reduced as soon as possible, at this time, a greater ratio of the sensible heat of the air conditioner is better. When the temperature of the room is close to or reaches a specified temperature, if the humidity is high and dehumidification is required, at this time, a greater ratio of the latent heat of the air conditioner is better. In this embodiment, the ratio of the latent heat/sensible heat can be effectively controlled by controlling the rotational speed of the indoor fan and the operating frequency of the compressor to achieve the effects of the dehumidification and temperature reduction. And, by reasonably controlling the ratio of the latent heat/sensible heat, the temperature and humidity double control can be achieved, and the indoor humidity and the indoor temperature can be controlled within the specified target range.

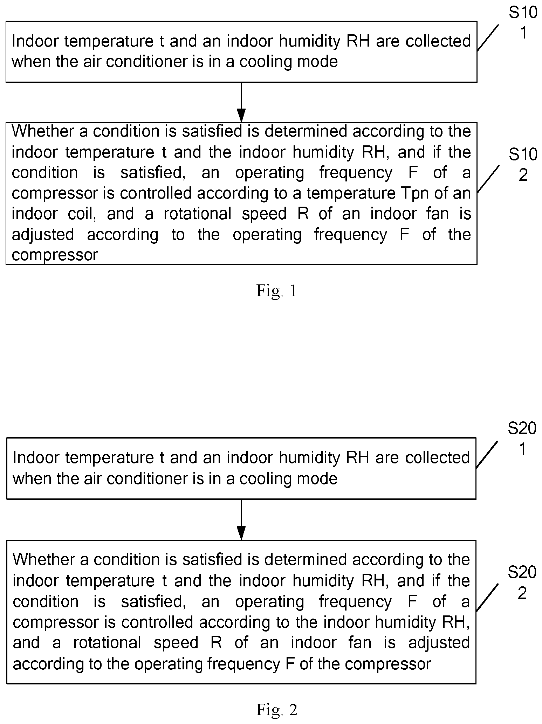

Fig. 1 is a flowchart illustrating a method for controlling an air conditioner according to an exemplary embodiment. As shown in Fig. 1, the method includes:

S101, an indoor temperature t and an indoor humidity RH are collected when the air conditioner is in a cooling mode.

In this embodiment, an operation mode of the air conditioner can be adjusted through a remote controller of the air conditioner, a control panel on an indoor unit of the air conditioner or a mobile terminal with a remote control function for the air conditioner, for example, the air conditioner can be controlled to perform a cooling mode by clicking a cooling mode button on the remote controller.

Generally, the air conditioner is installed in an indoor space such as a living room, a bedroom and a conference room. Therefore, a current temperature value of the indoor space such as the living room, the bedroom or the conference room where the air conditioner is installed can be obtained through S101, the current temperature value is the indoor temperature t obtained in real time in this process of the present disclosure.

The air conditioner is provided with a first temperature sensor for detecting a current temperature value of an indoor environment. A sensing end of the first temperature sensor can be provided on an air inlet or an outer wall of a casing of the air conditioner, so that the current temperature value detected by the first temperature sensor can be the same as or similar to an actual temperature of the indoor environment, thereby improving the accuracy of adjusting the operating frequency of the compressor and the rotational speed of the indoor fan of the air conditioner according to the current temperature value of the indoor environment.

The air conditioner is provided with a humidity sensor for detecting a current humidity value of the indoor environment, the current humidity value is the indoor humidity RH obtained in real time in this process of the present disclosure. A sensing end of the humidity sensor can be provided on the air inlet or the outer wall of the casing of the air conditioner, so that the current humidity value detected by the humidity sensor can be the same as or similar to an actual humidity of the indoor environment, thereby improving the accuracy of adjusting the operating frequency of the compressor and the rotational speed of the indoor fan of the air conditioner according to the current humidity value of the indoor environment.

S102, whether a condition is satisfied is determined according to the indoor temperature t and the indoor humidity RH, and if the condition is satisfied, an operating frequency F of a compressor is controlled according to a temperature Tpn of an indoor coil, and a rotational speed R of an indoor fan is adjusted according to the operating frequency F of the compressor, so that the indoor humidity and the indoor temperature are both within a specified target range.

In this embodiment, a second temperature sensor is provided on a surface of the coil of the indoor unit of the air conditioner or an inner wall of the casing of the air conditioner close to the coil for detecting the temperature Tpn of the indoor coil of the air conditioner, so as to adjust the operating frequency of the compressor and the rotational speed of the indoor fan of the air conditioner.

In some embodiments, the temperature of the coil in the indoor unit of the air conditioner can be calculated according to the operating frequency of the compressor and the rotational speed of the indoor fan.

An air-conditioning system presets judgment conditions for the indoor temperature t and the indoor humidity RH, and determines whether a condition is satisfied according to the indoor temperature t and the indoor humidity RH collected in S101. If the condition is satisfied, the operating frequency F of the compressor is controlled according to the temperature Tpn of the indoor coil, and the rotational speed R of the indoor fan is adjusted according to the operating frequency F of the compressor, so that the indoor humidity and the indoor temperature are both within the specified target range. By adjusting the operating frequency F of the compressor according to a plurality of parameters, the accuracy of the adjustment is improved.

In this embodiment, a more refined method for controlling a frequency of a compressor of the air conditioner and a rotational speed of a fan of the air conditioner is provided. When the air conditioner is in a cooling mode, the indoor temperature and the indoor humidity are collected, whether an operation state of the air conditioner needs to be adjusted is determined, the operating frequency of the compressor is adjusted according to the temperature of the indoor coil, and further the rotational speed of the indoor fan is adjusted, so that the indoor humidity and the indoor temperature are both within the specified target range, thereby effectively controlling a ratio of latent heat/sensible heat, improving the effects of temperature and humidity double control, and improving the user experience.

Fig. 2 is a flowchart illustrating a method for controlling an air conditioner according to an exemplary embodiment. As shown in Fig. 2, the method includes:

S201, an indoor temperature t and an indoor humidity RH are collected when the air conditioner is in a cooling mode.

In this embodiment, the air conditioner is provided with a first temperature sensor for detecting a current temperature value of an indoor environment. A sensing end of the first temperature sensor can be provided on an air inlet or an outer wall of a casing of the air conditioner, so that the current temperature value detected by the first temperature sensor can be the same as or similar to an actual temperature of the indoor environment, thereby improving the accuracy of adjusting the operating frequency of the compressor and the rotational speed of the indoor fan of the air conditioner according to the current temperature value of the indoor environment.

The air conditioner is provided with a humidity sensor for detecting a current humidity value of the indoor environment, the current humidity value is the indoor humidity RH obtained in real time in this process of the present disclosure. A sensing end of the humidity sensor can be provided on the air inlet or the outer wall of the casing of the air conditioner, so that the current humidity value detected by the humidity sensor can be the same as or similar to an actual humidity of the indoor environment, thereby improving the accuracy of adjusting the operating frequency of the compressor and the rotational speed of the indoor fan of the air conditioner according to the current humidity value of the indoor environment.

S202, whether a condition is satisfied is determined according to the indoor temperature t and the indoor humidity RH, and if the condition is satisfied, an operating frequency F of a compressor is controlled according to the indoor humidity RH, and a rotational speed R of an indoor fan is adjusted according to the operating frequency F of the compressor, so that the indoor humidity and the indoor temperature are both within a specified target range.

The air-conditioning system presets judgment conditions for the indoor temperature t and the indoor humidity RH, and determines whether a condition is satisfied according to the indoor temperature t and the indoor humidity RH collected in S201. If the condition is satisfied, the operating frequency F of the compressor is controlled according to the temperature Tpn of the indoor coil, and the rotational speed R of the indoor fan is adjusted according to the operating frequency F of the compressor, so that the indoor humidity and the indoor temperature are both within the specified target range. By adjusting the operating frequency F of the compressor according to a plurality of parameters, the accuracy of the adjustment is improved.

In this embodiment, a more refined method for controlling a frequency of a compressor of the air conditioner and a rotational speed of a fan of the air conditioner is provided. When the air conditioner is in a cooling mode, the indoor temperature and the indoor humidity are collected, whether an operation state of the air conditioner needs to be adjusted is determined, the operating frequency of the compressor is adjusted according to the indoor humidity, and further the rotational speed of the indoor fan is adjusted, so that the indoor humidity and the indoor temperature are both within the specified target range, thereby effectively controlling a ratio of latent heat/sensible heat, improving the effects of temperature and humidity double control, and improving the user experience.

In some embodiments, in S202, whether the condition is satisfied is determined according to the indoor temperature t and the indoor humidity RH, and if the condition is satisfied, the operating frequency F of the compressor is controlled according to the temperature Tpn of the indoor coil and the indoor humidity RH, and the rotational speed R of the indoor fan is adjusted according to the operating frequency F of the compressor, so that the indoor humidity and the indoor temperature are both within the specified target range.

In any of the foregoing embodiments, indoor target temperatures correspond to target humidity ranges (RH1, RH2). Here, a corresponding relationship between the indoor target temperatures and the target humidity ranges (RH1, RH2) can be stored in the air-conditioning system in advance, that is, for each indoor target temperature, multiple human bodies can be tested to obtain a corresponding humidity that is most comfortable for the human body; in a specified area of the indoor target temperature, humidity values of samples collected from the multiple human bodies corresponding to a specified somatosensory comfort level is obtained; the target humidity range (RH1, RH2) corresponding to the indoor target temperature is determined according to the humidity values; and the corresponding relationship is saved. For example, the indoor target temperature is 25°C, at this time, a relative humidity is between 40% and 60%, most users will feel the most comfortable; therefore, the humidity of 40% to 60% can be determined as the target humidity range corresponding to a specified temperature of 25°C, and the corresponding relationship between the indoor target temperature of 25°C and the target humidity range of 40% to 60% can be saved.

Therefore, the corresponding relationship between the indoor target temperature and the target humidity range pre-saved in the air-conditioning system can be shown in Table 1:

Table 1

| Indoor target temperature | Target humidity range |
| --- | --- |
| 30°C | humidity 30%~50% |
| 28°C | humidity 30%~60% |
| ... | ... |
| 25°C | humidity 40%~60% |
| ... | ... |

According to the corresponding relationship shown in Table 1, the current target humidity range (RH1, RH2) corresponding to the current indoor target temperature of the air conditioner is determined. As shown in Table 1, if a current specified temperature is 28°C, an obtained current target humidity range is 30% to 60%.

The indoor temperature will constantly change during the operation of the air conditioner, in order to meet needs of the users, the indoor temperature needs to be controlled within a certain range. A target range of the indoor temperature depends on the indoor target temperature set by a user, and is determined according to the indoor target temperature set by the user and a temperature fluctuation value preset by the system. The indoor target temperature is set by the user through a remote controller of the air conditioner, a control panel on an indoor unit of the air conditioner or a mobile terminal with a remote control function for the air conditioner. For example, if the temperature fluctuation value preset by the system is 2°C, and the indoor target temperature set by the user is 28°C, the target range of the indoor temperature is (26°C, 30°C).

In some embodiments, the operating frequency F of the compressor is calculated and adjusted according to a temperature difference PT between the temperature Tpn of the indoor coil and a target temperature Tpm of the indoor coil and a temperature change DT of the indoor coil. Specifically, the operating frequency F of the compressor is determined according to the following formula (1):

$$F=T\_Ki \times DT + T\_Kp \times PT; \qquad (1)$$

where PT=Tpn-Tpm, DT=Tpn-Tpn1, Tpn1 is a temperature of the indoor coil collected last time, and T_Kp and T_Ki are weighting coefficients respectively.

Further, a selection of T_Ki is related to a system configuration and an external environment temperature, and a selection of T_Kp is related to the system configuration and the external environment temperature. For example, the higher the external environment temperature, the greater the value of T_Ki or T_Kp. The higher the external environment temperature, the greater the adjustment range of various parameters required reaching the target temperature or humidity, and thus, the greater the weighting coefficients are. The external environment temperature includes an indoor environment temperature or an outdoor environment temperature. In the system configuration, the selection of T_Ki and T_Kp is related to a throttling device being a capillary or an expansion valve, a displacement performance of the compressor or a size of a condenser and an evaporator.

Further, a value range of T_Ki is 1 to 10, and a value range of T_Kp is 1 to 8. Preferably, T_Ki=3, 4, 5, 6 or 7, and T_Kp=3, 4, 5, 6 or 7. For example, when T_Ki=4, T_Kp=5, PT=10, and DT=2, according to the formula (1): $F=4\times2+5\times10=58$, the unit thereof is Hz.

In some embodiments, the operating frequency F of the compressor is calculated and adjusted according to a humidity difference $\Delta RH$ between the indoor humidity RH and a target humidity RH Target and a change $\Delta RH'$ of the indoor humidity. Specifically, the operating frequency F of the compressor is determined according to the following formula (2):

$$F=RH\_Ki\times\Delta RH'+RH\_Kp\times\Delta RH; \qquad (2)$$

where $\Delta RH=RH-RH\_Target$, $\Delta RH'=RH-RH1$, RH1 is an indoor humidity collected last time, and RH_Ki and RH_Kp are specified weighting coefficients respectively.

Further, a selection of RH_Ki is related to the system configuration and the external environment temperature, and the selection of RH_Kp is related to the system configuration and the external environment temperature. For example, the higher the external environment temperature, the greater the value of RH_Ki or RH_Kp. The higher the external environment temperature, the greater the adjustment range of various parameters required reaching the target temperature or humidity, and thus, the greater the weighting coefficients are. The external environment temperature includes the indoor environment temperature or the outdoor environment temperature. In the system configuration, the selection of RH_Ki and RH_Kp is related to the throttling device being the capillary or the expansion valve, the displacement performance of the compressor or the size of the condenser and the evaporator.

Further, a value range of RH_Ki is 1 to 10, and a value range of RH_Kp is 1 to 8. Preferably, RH_Ki=2, 3, 4, 5, 6 or 7, and RH_Kp=2, 3, 4, 5, 6 or 7. Preferably, a preferred value of the target humidity RH Target is 52%. For example, when RH_Ki=2, RH_Kp=4, $\Delta RH=15$, and $\Delta RH'=4$, according to the formula (2): $F=2\times4+4\times15=68$, the unit thereof is Hz.

In some embodiments, firstly, a first candidate operating frequency of the compressor is calculated according to the temperature Tpn of the indoor coil and the formula (1); secondly, a second candidate operating frequency of the compressor is calculated according to the indoor humidity RH and the formula (2); and finally, the smaller of the first candidate operating frequency and the second candidate operating frequency is selected as the operating frequency F of the compressor. The operating frequency of the compressor is calculated by integrating different parameters, thereby further improving the accuracy of the adjustment of the air conditioner.

In some embodiments, the air-conditioning system is provided with an operating frequency range of the compressor. When the calculated operating frequency F is greater than a specified upper limit value, the operating frequency F of the compressor is set to the upper limit value; and when the calculated operating frequency F is less than a specified lower limit value, the operating frequency F of the compressor is set to the lower limit value, thereby ensuring the operation efficiency of the air conditioner, and extending the service life of the compressor of the air conditioner. Preferably, the operating frequency range of the compressor is (30Hz, 70Hz). For example, when the preset operating frequency range of the compressor is (30Hz, 70Hz), if the operating frequency F of the compressor obtained according to the formula (1) or the formula (2) is 25Hz, the operating frequency of the compressor is adjusted to the specified lower limit value of 30Hz; and if the operating frequency F of the compressor obtained according to the formula (1) or the formula (2) is 75Hz, the operating frequency of the compressor is adjusted to the specified upper limit value of 70Hz.

In any of the foregoing embodiments, after determining the operating frequency F of the compressor, the adjusting the rotational speed R of the indoor fan according to the operating frequency F of the compressor includes: the higher the frequency of the compressor, the higher the rotational speed R of the indoor fan.

The specific adjustment method is as follows: an alternative method is to obtain the rotational speed of the indoor fan by searching from a table storing a preset corresponding relationship between the operating frequency F of the compressor and the rotational speed R of the indoor fan. The corresponding relationship is shown in Table 2:

Table 2

| Operating frequency of the compressor (Hz) | Rotational speed of the indoor fan (r/min) |
| --- | --- |
| 60~ | 950 |
| 55~59 | 850 |
| 50~54 | 800 |

(continued)

| Operating frequency of the compressor (Hz) | Rotational speed of the indoor fan (r/min) |
| --- | --- |
| 45~49 | 750 |
| 40~44 | 750 |
| 35~39 | 700 |

When the indoor fan runs at a high speed, the temperature of the coil is high, the ratio of the sensible heat is high, and the amount of the dehumidification is small; and when the indoor fan runs at a low speed, the temperature of the coil is low, the ratio of the latent heat is high, and the amount of the dehumidification is large.

The rotational speeds of the indoor fans corresponding to different operating frequency ranges of the compressor are different, the rotational speed of the indoor fan corresponding to a low frequency range is low, and the rotational speed of the indoor fan corresponding to a high frequency range is high, although the lower a wind speed is at a certain frequency, the larger the amount of the dehumidification is, the excessively low wind speed in the high frequency range will cause the risk of freezing of the coil in the indoor unit.

The rotational speed R of the indoor fan is calculated according to the operating frequency F of the compressor and the following formula (3):

$$R=15 \times F+50. \qquad (3)$$

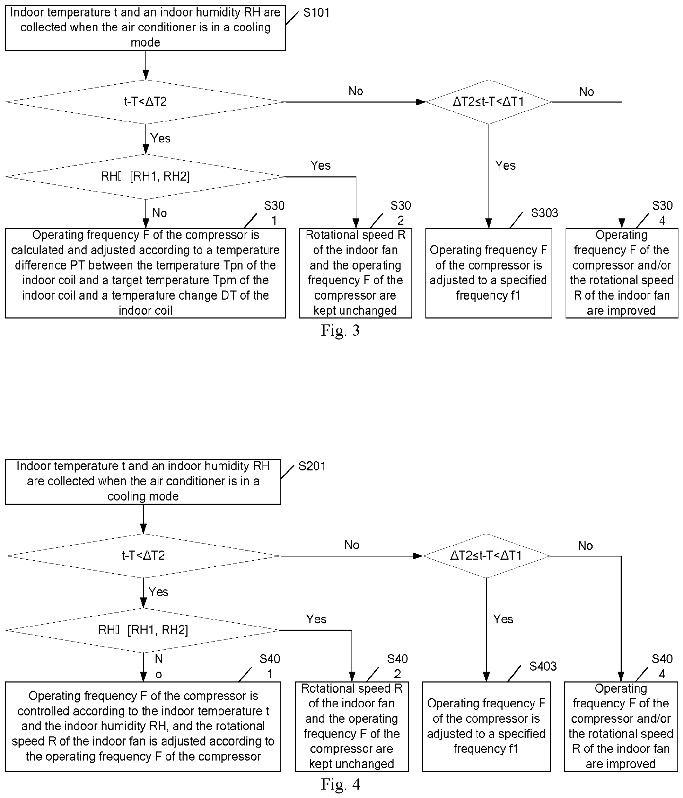

Fig. 3 is a flowchart illustrating a method for controlling an air conditioner according to an exemplary embodiment. As shown in Fig. 3, the method includes: S101, an indoor temperature t and an indoor humidity RH are collected when the air conditioner is in a cooling mode; when a temperature difference $\Delta t$ between the indoor temperature t and a specified temperature T is less than a second specified temperature difference $\Delta T2$ and the indoor humidity RH is outside a target humidity range (RH1, RH2), S301 is performed; when the temperature difference $\Delta t$ between the indoor temperature t and the specified temperature t is less than the second specified temperature difference $\Delta T2$ and the indoor humidity RH is within the target humidity range (RH1, RH2), S302 is performed; when the temperature difference $\Delta t$ between the indoor temperature t and the specified temperature T is greater than or equal to the second specified temperature difference $\Delta T2$ and less than a first specified temperature difference $\Delta T1$, S303 is performed; and when the temperature difference $\Delta t$ is greater than or equal to the first specified temperature difference $\Delta T1$, S304 is performed.

The air conditioner is preset with the first specified temperature difference $\Delta T1$ and the second specified temperature difference $\Delta T2$, wherein the first specified temperature difference $\Delta T1$ and the second specified temperature difference $\Delta T2$ are greater than zero. The first specified temperature difference $\Delta T1$ is greater than the second specified temperature difference $\Delta T2$.

In S301, when the temperature difference $\Delta t$ between the indoor temperature t and the specified temperature T is less than the second specified temperature difference $\Delta T2$, and the indoor humidity RH is outside the target humidity range (RH1, RH2), the condition is satisfied, that is, t-T<$\Delta T2$, and RH$\notin$(RH1, RH2), at this time, the operating frequency F of the compressor is controlled according to the temperature Tpn of the indoor coil, and the rotational speed R of the indoor fan is adjusted according to the operating frequency F of the compressor, so that both the indoor humidity and the indoor temperature are within the specified target range.

In S302, when the temperature difference $\Delta t$ between the indoor temperature t and the specified temperature t is less than the second specified temperature difference $\Delta T2$, and the indoor humidity RH is within the target humidity range (RH1, RH2), the condition is not satisfied, that is, t-T<$\Delta T2$, and RHE[RH1, RH2], at this time, the rotational speed R of the indoor fan and the operating frequency F of the compressor are kept unchanged.

In S303, when the temperature difference $\Delta t$ between the indoor temperature t and the specified temperature T is greater than or equal to the second specified temperature difference $\Delta T2$ and less than a first specified temperature difference $\Delta T1$, that is, $\Delta T2 \leq t-T < \Delta T1$, the operating frequency F of the compressor is adjusted to a specified frequency f1.

In some embodiments, the specified frequency f1 is 70% of the highest frequency of the compressor.

In the foregoing embodiments, when the temperature difference $\Delta t$ is greater than or equal to the first specified temperature difference $\Delta T1$, that is, t-T$\geq \Delta T1$, the operating frequency F of the compressor is improved to reduce the indoor temperature.

In other embodiments, when the temperature difference $\Delta t$ is greater than or equal to the first specified temperature difference $\Delta T1$, that is, t-T$\geq \Delta T1$, the rotational speed R of the indoor fan is improved to reduce the indoor temperature.

In other embodiments, when the temperature difference Δt is greater than or equal to the first specified temperature difference ΔT1, that is, t-T≥ΔT1, the operating frequency F of the compressor and the rotational speed R of the indoor fan are improved to accelerate a rate of reducing the indoor temperature.

Fig. 4 is a flowchart illustrating a method for controlling an air conditioner according to an exemplary embodiment. As shown in Fig. 4, the method includes: S201, an indoor temperature t and an indoor humidity RH are collected when the air conditioner is in a cooling mode; when a temperature difference Δt between the indoor temperature t and a specified temperature T is less than a second specified temperature difference ΔT2 and the indoor humidity RH is outside a target humidity range (RH1, RH2), S401 is performed; when the temperature difference Δt between the indoor temperature t and the specified temperature t is less than the second specified temperature difference ΔT2 and the indoor humidity RH is within the target humidity range (RH1, RH2), S402 is performed; when the temperature difference Δt between the indoor temperature t and the specified temperature T is greater than or equal to the second specified temperature difference ΔT2 and less than a first specified temperature difference ΔT1, S403 is performed; and when the temperature difference Δt is greater than or equal to the first specified temperature difference ΔT1, S404 is performed.

The air conditioner is preset with the first specified temperature difference ΔT1 and the second specified temperature difference ΔT2, wherein the first specified temperature difference ΔT1 and the second specified temperature difference ΔT2 are greater than zero. The first specified temperature difference ΔT1 is greater than the second specified temperature difference ΔT2.

In S401, when the temperature difference Δt between the indoor temperature t and the specified temperature T is less than the second specified temperature difference ΔT2, and the indoor humidity RH is outside the target humidity range (RH1, RH2), the condition is satisfied, that is, t-T<ΔT2, and RH∉(RH1, RH2), at this time, the operating frequency F of the compressor is controlled according to the indoor humidity RH, and the rotational speed R of the indoor fan is adjusted according to the operating frequency F of the compressor, so that both the indoor humidity and the indoor temperature are within the specified target range.

In some embodiments, in S401, when the temperature difference Δt between the indoor temperature t and the specified temperature T is less than the second specified temperature difference ΔT2, and the indoor humidity RH is outside the target humidity range (RH1, RH2), the condition is satisfied, that is, t-T<ΔT2, and RH∉(RH1, RH2), at this time, whether a condition is satisfied is determined according to the indoor temperature t and the indoor humidity RH; and if the condition is satisfied, the operating frequency F of the compressor is controlled according to the indoor temperature t and the indoor humidity RH, and the rotational speed R of the indoor fan is adjusted according to the operating frequency F of the compressor, so that both the indoor humidity and the indoor temperature are within the specified target range.

In S402, when the temperature difference Δt between the indoor temperature t and the specified temperature t is less than the second specified temperature difference ΔT2, and the indoor humidity RH is within the target humidity range (RH1, RH2), the condition is not satisfied, that is, t-T<ΔT2, and RHE[RH1, RH2], at this time, the rotational speed R of the indoor fan and the operating frequency F of the compressor are kept unchanged.

In S403, when the temperature difference Δt between the indoor temperature t and the specified temperature T is greater than or equal to the second specified temperature difference ΔT2 and less than a first specified temperature difference ΔT1, that is, ΔT2≤t-T≤ΔT1, the operating frequency F of the compressor is adjusted to a specified frequency f1.

In some embodiments, the specified frequency f1 is 70% of the highest frequency of the compressor.

In the foregoing embodiments, when the temperature difference Δt is greater than or equal to the first specified temperature difference ΔT1, that is, t-T≥ΔT1, the operating frequency F of the compressor is improved to reduce the indoor temperature.

In other embodiments, when the temperature difference Δt is greater than or equal to the first specified temperature difference ΔT1, that is, t-T≥ΔT1, the rotational speed R of the indoor fan is improved to reduce the indoor temperature.

In other embodiments, when the temperature difference Δt is greater than or equal to the first specified temperature difference ΔT1, that is, t-T≥ΔT1, the operating frequency F of the compressor and the rotational speed R of the indoor fan are improved to accelerate a rate of reducing the indoor temperature.

The following are device embodiments of the present disclosure, and the device embodiments may be configured to execute the method embodiments of the present disclosure.

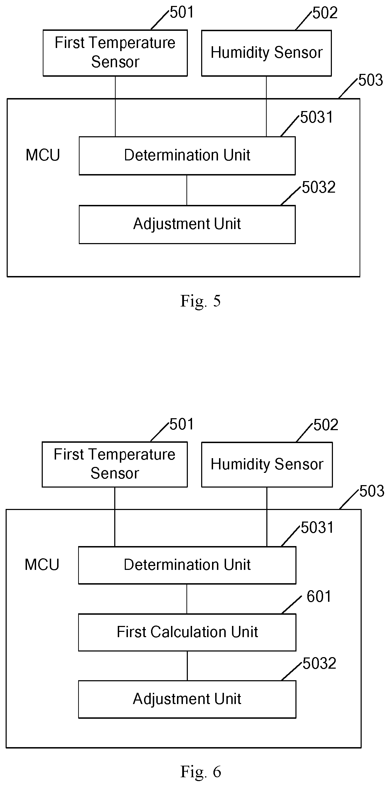

Fig. 5 is a structural block diagram illustrating a device for controlling an air conditioner according to an exemplary embodiment. As shown in Fig. 5, the device includes a first temperature sensor 501, a humidity sensor 502 and a microcontroller unit MCU 503; the MCU 503 includes a determination unit 5031 and an adjustment unit 5032.

The first temperature sensor 501 is configured to collect an indoor temperature t.

The humidity sensor 502 is configured to collect an indoor humidity RH.

In this embodiment, a sensing end of the first temperature sensor is provided on an air inlet or an outer wall of a casing of the air conditioner, and a sensing end of the humidity sensor is provided on the air inlet or the outer wall of the casing of the air conditioner.

The determination unit 5031 is configured to determine whether a condition is satisfied according to the indoor temperature t and the indoor humidity RH.

The adjustment unit 5032 is configured to, when the determination unit 5031 determines that the condition is satisfied, control an operating frequency F of a compressor according to a temperature $T_{pn}$ of an indoor coil, and adjust a rotational speed R of an indoor fan according to the operating frequency F of the compressor, so that the indoor humidity and the indoor temperature are both within a specified target range.

In this embodiment, a second temperature sensor is provided on a surface of the coil of the indoor unit of the air conditioner or an inner wall of the casing of the air conditioner close to the coil for detecting the temperature $T_{pn}$ of the indoor coil of the air conditioner, so as to adjust the operating frequency of the compressor and the rotational speed of the indoor fan of the air conditioner.

In some embodiments, the temperature of the indoor coil is calculated according to the operating frequency of the compressor and the rotational speed of the indoor fan.

In this embodiment, when the air conditioner is in a cooling mode, the first temperature sensor collects an indoor temperature in real time, the humidity sensor collects an indoor humidity in real time, the determination unit determines whether the operation state of the air conditioner needs to be adjusted, the adjustment unit adjusts the operating frequency of the compressor according to the temperature of the indoor coil, and further adjusts the rotational speed of the indoor fan, so that the indoor humidity and the indoor temperature are both within a specified target range, thereby effectively controlling a ratio of latent heat/sensible heat, improving the effects of temperature and humidity double control, and improving the user experience.

As shown in Fig. 6, in some embodiments, in the device for controlling the air conditioner, the MCU 503 further includes a first calculation unit 601.

The first calculation unit 601 is configured to calculate the operating frequency F of the compressor according to a temperature difference PT between the temperature $T_{pn}$ of the indoor coil and a target temperature $T_{pm}$ of the indoor coil and a temperature change DT of the indoor coil. Specifically, the operating frequency F of the compressor is calculated according to the formula (1).

The adjustment unit 5032 is configured to adjust the operating frequency F of the compressor according to a calculation result of the first calculation unit 601.

In any of the foregoing embodiments, the air-conditioning system is provided with an operating frequency range of the compressor, when an operating frequency F calculated by the first calculation unit 601 is greater than a specified upper limit value, the operating frequency F of the compressor is set to the upper limit value; and when the calculated operating frequency F is less than a specified lower limit value, the operating frequency F of the compressor is set to the lower limit value, thereby ensuring the operation efficiency of the air conditioner, and extending the service life of the compressor of the air conditioner.

The adjustment unit 5032 adjusts the rotational speed R of the indoor fan according to the operating frequency F of the compressor, and the higher the operating frequency F of the compressor, the higher the rotational speed R of the indoor fan.

An alternative method is to obtain the rotational speed of the fan based on Table 2 storing a preset corresponding relationship between the operating frequency F of the compressor and the rotational speed R of the indoor fan.

Another alternative method is to determine the rotational speed R of the indoor fan through the first calculation unit 601 according to the operating frequency F of the compressor and the formula (3).

In some embodiments, when a temperature difference $\Delta t$ between the indoor temperature t and a specified temperature T is less than a second specified temperature difference $\Delta T2$ and the indoor humidity RH is outside a target humidity range (RH1, RH2), the condition is satisfied, at this time, the first calculation unit 601 is configured to calculate the operating frequency of the compressor according to the temperature $T_{pn}$ of the indoor coil and the formula (1), and the adjustment unit 5032 is configured to adjust the operating frequency of the compressor according to the calculation result of the first calculation unit 601.

In some embodiments, when the temperature difference $\Delta t$ between the indoor temperature t and the specified temperature T is less than the second specified temperature difference $\Delta T2$ and the indoor humidity RH is within the target humidity range (RH1, RH2), the rotational speed R of the indoor fan and the operating frequency F of the compressor are kept unchanged.

In any of the foregoing embodiments, the air-conditioning system is provided with an operating frequency range of the compressor, when an operating frequency F calculated by the first calculation unit 601 is greater than a specified upper limit value, the operating frequency F of the compressor is set to the upper limit value; and when the calculated operating frequency F is less than a specified lower limit value, the operating frequency F of the compressor is set to the lower limit value, thereby ensuring the operation efficiency of the air conditioner, and extending the service life of the compressor of the air conditioner.

The adjustment unit 5032 adjusts the rotational speed R of the indoor fan according to the operating frequency F of the compressor, and the higher the operating frequency F of the compressor, the higher the rotational speed R of the indoor fan.

An alternative method is to obtain the rotational speed of the fan based on Table 2 storing a preset corresponding relationship between the operating frequency F of the compressor and the rotational speed R of the indoor fan.

Another alternative method is to determine the rotational speed R of the indoor fan through the first calculation unit 601 according to the operating frequency F of the compressor and the formula (3).

In some embodiments, when a temperature difference $\Delta t$ between the indoor temperature t and a specified temperature T is less than a second specified temperature difference $\Delta T2$ and the indoor humidity RH is outside a target humidity range (RH1, RH2), the condition is satisfied, at this time, the first calculation unit 601 is configured to calculate the operating frequency of the compressor according to the indoor humidity RH and the formula (2), and the adjustment unit 5032 is configured to adjust the operating frequency of the compressor according to the calculation result of the first calculation unit 601.

In some embodiments, when a temperature difference $\Delta t$ between the indoor temperature t and a specified temperature T is less than a second specified temperature difference $\Delta T2$ and the indoor humidity RH is outside a target humidity range (RH1, RH2), the condition is satisfied, at this time, the first calculation unit 601 is configured to calculate a first candidate operating frequency of the compressor according to the temperature Tpn of the indoor coil and the formula (1), calculate a second candidate operating frequency of the compressor according to the indoor humidity RH and the formula (2), and select the smaller of the first candidate operating frequency and the second candidate operating frequencies as the operating frequency F of the compressor; and the adjustment unit 5032 is configured to adjust the operating frequency of the compressor according to the calculation result of the first calculation unit 601.

In some embodiments, when the temperature difference $\Delta t$ between the indoor temperature t and the specified temperature T is less than the second specified temperature difference $\Delta T2$ and the indoor humidity RH is within the target humidity range (RH1, RH2), the rotational speed R of the indoor fan and the operating frequency F of the compressor are kept unchanged.

In some embodiments, the adjustment unit 5032 is further configured to, when the temperature difference $\Delta t$ between the indoor temperature t and the specified temperature T is greater than or equal to the second specified temperature difference $\Delta T2$ and less than a first specified temperature difference $\Delta T1$, adjust the operating frequency F of the compressor to a specified frequency f1.

In some embodiments, the specified frequency f1 is 70% of the highest frequency of the compressor.

In some embodiments, the adjustment unit 5032 is further configured to, when the temperature difference $\Delta t$ is greater than or equal to the first specified temperature difference $\Delta T1$, improve the operating frequency F of the compressor to reduce the indoor temperature.

In some embodiments, the adjustment unit 5032 is further configured to, when the temperature difference $\Delta t$ is greater than or equal to the first specified temperature difference $\Delta T1$, improve the rotational speed R of the indoor fan to reduce the indoor temperature.

In other embodiments, the adjustment unit 5032 is further configured to, when the temperature difference $\Delta t$ is greater than or equal to the first specified temperature difference $\Delta T1$, improve the operating frequency F of the compressor and the rotational speed R of the indoor fan to accelerate a rate of reducing the indoor temperature.

In some embodiments, the device for controlling the air conditioner includes a first temperature sensor 501, a humidity sensor 502 and a microcontroller unit MCU 503; the MCU 503 includes a determination unit 5031 and an adjustment unit 5032. The adjustment unit 5032 is configured to, when the determination unit 5031 determines that the condition is satisfied, control an operating frequency F of a compressor according to the indoor humidity RH, and adjust a rotational speed R of an indoor fan according to the operating frequency F of the compressor, so that the indoor humidity and the indoor temperature are both within a specified target range.

In this embodiment, when the air conditioner is in a cooling mode, the first temperature sensor collects an indoor temperature in real time, the humidity sensor collects an indoor humidity in real time, the determination unit determines whether the operation state of the air conditioner needs to be adjusted, the adjustment unit adjusts the operating frequency of the compressor according to the indoor humidity, and further adjusts the rotational speed of the indoor fan, so that the indoor humidity and the indoor temperature are both within a specified target range, thereby effectively controlling a ratio of latent heat/sensible heat, improving the effects of temperature and humidity double control, and improving the user experience.

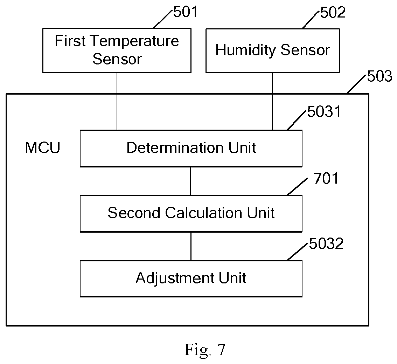

As shown in Fig. 7, in some embodiments, in the device for controlling the air conditioner, the MCU 503 further includes a second calculation unit 701.

The second calculation unit 701 is configured to calculate and adjust the operating frequency F of the compressor according to a humidity difference $\Delta RH$ between the indoor humidity RH and a target humidity RH_Target and a change $\Delta RH'$ of the indoor humidity. Specifically, the operating frequency F of the compressor is calculated according to the formula (2).

In some embodiments, the adjustment unit 5032 is configured to, when the determination unit 5031 determines that the condition is satisfied, control an operating frequency F of a compressor according to a temperature Tpn of an indoor coil and the indoor humidity RH, and adjust a rotational speed R of an indoor fan according to the operating frequency F of the compressor, so that the indoor humidity and the indoor temperature are both within a specified target range.

In some embodiments, the second calculation unit 701 is configured to calculate a first candidate operating frequency of the compressor according to the temperature Tpn of the indoor coil and the formula (1), and calculate a second candidate operating frequency of the compressor according to the indoor humidity RH and the formula (2). Finally, the minimum of the first candidate operating frequency and the second candidate operating frequencies is selected as the operating frequency F of the compressor.

In any of the foregoing embodiments, the adjustment unit 5032 is configured to adjust the operating frequency F of the compressor according to a calculation result of the second calculation unit 701.

In any of the foregoing embodiments, the air-conditioning system is provided with an operating frequency range of the compressor, when an operating frequency F calculated by the second calculation unit 701 is greater than a specified upper limit value, the operating frequency F of the compressor is set to the upper limit value; and when the calculated operating frequency F is less than a specified lower limit value, the operating frequency F of the compressor is set to the lower limit value, thereby ensuring the operation efficiency of the air conditioner, and extending the service life of the compressor of the air conditioner.

The adjustment unit 5032 adjusts the rotational speed R of the indoor fan according to the operating frequency F of the compressor, and the higher the operating frequency F of the compressor, the higher the rotational speed R of the indoor fan.

An alternative method is to obtain the rotational speed of the fan based on Table 2 storing a preset corresponding relationship between the operating frequency F of the compressor and the rotational speed R of the indoor fan.

Another alternative method is to determine the rotational speed R of the indoor fan through the first calculation unit 601 according to the operating frequency F of the compressor and the formula (3).

In some embodiments, when a temperature difference $\Delta t$ between the indoor temperature t and a specified temperature T is less than a second specified temperature difference $\Delta T2$ and the indoor humidity RH is outside a target humidity range (RH1, RH2), the condition is satisfied, at this time, the second calculation unit 701 is configured to calculate the operating frequency of the compressor according to the indoor humidity RH and the formula (2), and the adjustment unit 5032 is configured to adjust the operating frequency of the compressor according to the calculation result of the second calculation unit 701.

In some embodiments, when a temperature difference $\Delta t$ between the indoor temperature t and a specified temperature T is less than a second specified temperature difference $\Delta T2$ and the indoor humidity RH is outside a target humidity range (RH1, RH2), the condition is satisfied, at this time, the second calculation unit 701 is configured to calculate a first candidate operating frequency of the compressor according to the temperature Tpn of the indoor coil and the formula (1), calculate a second candidate operating frequency of the compressor according to the indoor humidity RH and the formula (2), and select the smaller of the first candidate operating frequency and the second candidate operating frequencies as the operating frequency F of the compressor; and the adjustment unit 5032 is configured to adjust the operating frequency of the compressor according to the calculation result of the second calculation unit 701.

In some embodiments, when the temperature difference $\Delta t$ between the indoor temperature t and the specified temperature T is less than the second specified temperature difference $\Delta T2$ and the indoor humidity RH is within the target humidity range (RH1, RH2), the rotational speed R of the indoor fan and the operating frequency F of the compressor are kept unchanged.

In some embodiments, the adjustment unit 5032 is further configured to, when the temperature difference $\Delta t$ between the indoor temperature t and the specified temperature T is greater than or equal to the second specified temperature difference $\Delta T2$ and less than a first specified temperature difference $\Delta T1$, adjust the operating frequency F of the compressor to a specified frequency f1.

In some embodiments, the specified frequency f1 is 70% of the highest frequency of the compressor.

In some embodiments, the adjustment unit 5032 is further configured to, when the temperature difference $\Delta t$ is greater than or equal to the first specified temperature difference $\Delta T1$, improve the operating frequency F of the compressor to reduce the indoor temperature.

In some embodiments, the adjustment unit 5032 is further configured to, when the temperature difference $\Delta t$ is greater than or equal to the first specified temperature difference $\Delta T1$, improve the rotational speed R of the indoor fan to reduce the indoor temperature.

In other embodiments, the adjustment unit 5032 is further configured to, when the temperature difference $\Delta t$ is greater than or equal to the first specified temperature difference $\Delta T1$, improve the operating frequency F of the compressor and the rotational speed R of the indoor fan to accelerate a rate of reducing the indoor temperature.

In some embodiments, the adjustment unit 5032 is further configured to, when the temperature difference $\Delta t$ between the indoor temperature t and the specified temperature T is greater than or equal to the second specified temperature difference $\Delta T2$ and less than a first specified temperature difference $\Delta T1$, adjust the operating frequency F of the compressor to a specified frequency f1.

In some embodiments, the specified frequency f1 is 70% of the highest frequency of the compressor.

In some embodiments, the adjustment unit 5032 is further configured to, when the temperature difference $\Delta t$ is greater than or equal to the first specified temperature difference $\Delta T1$, improve the operating frequency F of the compressor to reduce the indoor temperature.

In some embodiments, the adjustment unit 5032 is further configured to, when the temperature difference $\Delta t$ is greater than or equal to the first specified temperature difference $\Delta T1$, improve the rotational speed R of the indoor fan to reduce the indoor temperature.

In other embodiments, the adjustment unit 5032 is further configured to, when the temperature difference $\Delta t$ is greater than or equal to the first specified temperature difference $\Delta T1$, improve the operating frequency F of the compressor and the rotational speed R of the indoor fan to accelerate a rate of reducing the indoor temperature.

The present disclosure also includes an air conditioner including a compressor and an indoor fan, and further including the device described in any of the foregoing embodiments.

**Claims**

1. A method for controlling an air conditioner comprising:

    collecting (S101, S201) an indoor temperature t and an indoor humidity RH when the air conditioner is in a cooling mode; and
    determining (S102, S202) whether a condition is satisfied according to the indoor temperature t and the indoor humidity RH, and if the condition is satisfied, controlling an operating frequency F of a compressor according to a temperature Tpn of an indoor coil or the indoor humidity RH, and adjusting a rotational speed R of an indoor fan according to the operating frequency F of the compressor,
    **characterized in that**
    when a temperature difference $\Delta t$ between the indoor temperature t and a specified temperature T is less than a second specified temperature difference $\Delta T2$ and the indoor humidity RH is outside a target humidity range (RH1, RH2), the condition is satisfied, wherein the second specified temperature difference $\Delta T2$ is greater than zero, **in that**
    the operating frequency F of the compressor is determined according to the following formula:

$$F=RH\_Ki\times\Delta RH'+RH\_Kp\times\Delta RH,$$

    where $\Delta RH=RH-RH\_Target$, $\Delta RH'=RH-RH1$, RH1 is an indoor humidity collected last time, and RH_Ki and RH_Kp are specified weighting coefficients respectively; and **in that** the rotational speed R of the indoor fan is calculated according to the operating frequency F of the compressor and the following formula:

$$R=15\times F+50.$$

2. The method according to claim 1, wherein the controlling (S101, S201) the operating frequency F of the compressor according to the temperature Tpn of the indoor coil comprises:

    calculating (S301) a temperature difference PT between the temperature Tpn of the indoor coil and a target temperature Tpm of the indoor coil; and
    calculating and adjusting (S301) the operating frequency F of the compressor according to the temperature difference PT and a temperature change DT of the indoor coil.

3. The method according to claim 1, wherein the controlling (S102, S202) the operating frequency F of the compressor according to the indoor humidity RH comprises:
    calculating and adjusting (S401) the operating frequency F of the compressor according to the humidity difference $\Delta RH$ and a change $\Delta RH'$ of the indoor humidity.

4. The method according to claim 1, further comprising: when the temperature difference $\Delta t$ between the indoor temperature t and the specified temperature T is less than the second specified temperature difference $\Delta T2$ and the indoor humidity RH is within the target humidity range (RH1, RH2), keeping (S302, S402) the rotational speed R of the indoor fan and the operating frequency F of the compressor unchanged.

5. The method according to claim 4, further comprising: when the temperature difference Δt between the indoor temperature t and the specified temperature T is greater than or equal to the second specified temperature difference ΔT2 and less than a first specified temperature difference ΔT1, adjusting (S303, S403) the operating frequency F of the compressor to a specified frequency f1.

6. The method according to claim 4 or 5, further comprising: when the temperature difference Δt is greater than or equal to the first specified temperature difference ΔT1, improving (S304, S404) the operating frequency F of the compressor and/or the rotational speed R of the indoor fan to reduce the indoor temperature.

7. A device for controlling an air conditioner comprising a first temperature sensor (501) for collecting an indoor temperature t, a humidity sensor (502) for collecting an indoor humidity RH, and a microcontroller unit MCU (503), wherein the MCU (503) comprises:

a determination unit (5031) configured to determine whether a condition is satisfied according to the indoor temperature t collected by the first temperature sensor (501) and the indoor humidity RH collected by the humidity sensor (502) when the air conditioner is in a cooling mode; and
an adjustment unit (5032) configured to, when the determination unit (5031) determines that the condition is satisfied, control an operating frequency F of a compressor according to a temperature Tpn of an indoor coil and the indoor humidity RH, and adjust a rotational speed R of an indoor fan according to the operating frequency F of the compressor,
**characterized in that**
when a temperature difference Δt between the indoor temperature t and a specified temperature T is less than a second specified temperature difference ΔT2 and the indoor humidity RH is outside a target humidity range (RH1, RH2), the condition is satisfied, wherein the second specified temperature difference ΔT2 is greater than zero,
further **characterized in that**
the operating frequency F of the compressor is determined according to the following formula:

$$F=RH\_Ki×ΔRH'+RH\_Kp×ΔRH,$$

where ΔRH=RH-RH_Target, ΔRH'=RH-RH1, RH1 is an indoor humidity collected last time, and RH_Ki and RH_Kp are specified weighting coefficients respectively; and
further **characterized in that**
the rotational speed R of the indoor fan is calculated according to the operating frequency F of the compressor and the following formula:

$$R=15×F+50.$$

8. The device according to claim 7, wherein the MCU (503) further comprises:

a first calculation unit (601) configured to calculate a temperature difference PT between the temperature Tpn of the indoor coil and a target temperature Tpm of the indoor coil; and calculate the operating frequency F of the compressor according to the temperature difference PT and a temperature change DT of the indoor coil; and
the adjustment unit (5032) is configured to adjust the operating frequency F of the compressor according to a calculation result of the first calculation unit (601).

9. The device according to claim 7, wherein the MCU (503) further comprises:

a second calculation unit (701) configured to calculate the operating frequency F of the compressor according to the humidity difference ΔRH and a change ΔRH' of the indoor humidity; and
the adjustment unit (5032) is configured to adjust the operating frequency F of the compressor according to a calculation result of the second calculation unit (701).

10. The device according to claim 7, wherein when the temperature difference Δt between the indoor temperature t and the specified temperature T is less than the second specified temperature difference ΔT2 and the indoor humidity RH is within the target humidity range (RH1, RH2), the rotational speed R of the indoor fan and the operating frequency F of the compressor are kept unchanged.

11. The device according to claim 10, wherein the adjustment unit (5032) is further configured to, when the temperature difference Δt between the indoor temperature t and the specified temperature T is greater than or equal to the second specified temperature difference ΔT2 and less than a first specified temperature difference ΔT1, adjust the operating frequency F of the compressor to a specified frequency f1.

12. The device according to claim 10 or 11, wherein the adjustment unit (5032) is further configured to, when the temperature difference Δt is greater than or equal to the first specified temperature difference ΔT1, improve the operating frequency F of the compressor and/or the rotational speed R of the indoor fan to reduce the indoor temperature.

13. An air-conditioning system, **characterized in that**, comprising a compressor and an indoor fan, and further comprising a device for controlling the air conditioner according to any one of claims 7 to 12.


**Patentansprüche**

1. Verfahren zum Steuern einer Klimaanlage mit den folgenden Schritten:

Erfassen (S101, S201) einer Innentemperatur t und einer Raumluftfeuchtigkeit RH, wenn die Klimaanlage sich in einem Kühlmodus befindet; und
Feststellen (S102, S202), gemäß der Innentemperatur t und der Raumluftfeuchtigkeit RH, ob eine Bedingung erfüllt ist, und wenn die Bedingung erfüllt ist, Steuern einer Betriebsfrequenz F eines Kompressors gemäß einer Temperatur Tpn einer Innenraumspule oder der Raumluftfeuchtigkeit RH, und Einstellen einer Drehzahl R eines Innenraumgebläses gemäß der Betriebsfrequenz F des Kompressors,
**dadurch gekennzeichnet, dass**
wenn eine Temperaturdifferenz Δt zwischen der Raumtemperatur t und einer vorgegebenen Temperatur T geringer als eine zweite vorgegebene Temperaturdifferenz ΔT2 ist und die Raumluftfeuchtigkeit RH außerhalb eines Soll-Luftfeuchtigkeitsbereichs (RH1, RH2) liegt, die Bedingung erfüllt ist, wobei die zweite, vorgegebene Temperaturdifferenz ΔT2 größer als Null ist,
die Betriebsfrequenz F des Kompressors gemäß der folgenden Formel ermittelt wird:

$$F = RH\_Ki^x \Delta RH' + RH\_Kp^x \Delta RH,$$

wobei ΔRH=RH-RH_Target, ΔRH'=RH-RHI, RHI eine beim letzten Mal erfasste Raumluftfeuchtigkeit angibt, und RH_Ki und RH_Kp jeweils vorgegebene Gewichtungskoeffizienten sind; und
die Drehzahl R des Innenraumgebläses gemäß der Betriebsfrequenz F des Kompressors und der folgenden Formel berechnet wird:

$$R = 15^x F + 50.$$

2. Verfahren nach Anspruch 1, bei welchem das Steuern (S101, S102) der Betriebsfrequenz F des Kompressors gemäß der Temperatur Tpn der Innenraumspule die folgenden Schritte aufweist:

Berechnen (S301) einer Temperaturdifferenz PT zwischen der Temperatur Tpn der Innenraumspule und einer Solltemperatur Tpm der Innenraumspule; und
Berechnen und Einstellen (S301) der Betriebsfrequenz F des Kompressors gemäß der Temperaturdifferenz PT und einer Temperaturänderung DT der Innenraumspule.

3. Verfahren nach Anspruch 1, bei welchem das Steuern (S101, S102) der Betriebsfrequenz F des Kompressors gemäß der Raumluftfeuchtigkeit RH den folgenden Schritt aufweist:
Berechnen und Einstellen (S401) der Betriebsfrequenz F des Kompressors gemäß der Luftfeuchtigkeitsdifferenz ΔRH und einer Änderung ΔRH' der Raumluftfeuchtigkeit.

4. Verfahren nach Anspruch 1, ferner mit dem Schritt: wenn die Temperaturdifferenz $\Delta t$ zwischen der Raumtemperatur t und der vorgegebenen Temperatur T geringer als die zweite vorgegebene Temperaturdifferenz $\Delta T2$ ist und die Raumluftfeuchtigkeit RH innerhalb des Soll-Luftfeuchtigkeitsbereichs (RH1, RH2) liegt, unverändertes Beibehalten der Drehzahl R des Innenraumgebläses und der Betriebsfrequenz F des Kompressors.

5. Verfahren nach Anspruch 4, ferner mit dem Schritt: wenn die Temperaturdifferenz $\Delta t$ zwischen der Raumtemperatur t und der vorgegebenen Temperatur T größer als oder gleich der zweiten vorgegebenen Temperaturdifferenz $\Delta T2$ und geringer als eine erste vorgegebene Temperaturdifferenz $\Delta T1$ ist, Einstellen (S303, S403) der Betriebsfrequenz F des Kompressors auf eine vorgegebene Frequenz f1.

6. Verfahren nach Anspruch 4 oder 5, ferner mit dem Schritt: wenn die Temperaturdifferenz $\Delta t$ größer als oder gleich der ersten vorgegebenen Temperaturdifferenz $\Delta T1$ ist, Verbessern (S304, S404) der Betriebsfrequenz F des Kompressors und/oder der Drehgeschwindigkeit R des Innenraumgebläses, um die Raumtemperatur zu verringern.

7. Vorrichtung zum Steuern einer Klimaanlage mit einem ersten Temperatursensor (501) zum Erfassen einer Raumtemperatur t, einem Luftfeuchtigkeitssensor (502) zum Erfassen einer Raumluftfeuchtigkeit RH, und einer Mikrocontrollereinheit MCU (503), wobei die MCU (503) aufweist:

   eine Feststellungseinheit (5031), die dazu ausgebildet ist, gemäß der von dem ersten Temperatursensor (501) erfassten Innentemperatur t und der von dem Luftfeuchtigkeitssensor (502) erfassten Raumluftfeuchtigkeit RH, welche jeweils bei in einem Kühlmodus befindlicher Klimaanlage erfasst werden, festzustellen, ob eine Bedingung erfüllt ist; und
   eine Einstelleinheit (5032), die dazu ausgebildet ist, wenn die Feststellungseinheit (5031) feststellt, dass die Bedingung erfüllt ist, eine Betriebsfrequenz F eines Kompressors gemäß einer Temperatur Tpn einer Innenraumspule und der Raumluftfeuchtigkeit RH zu steuern, und eine Drehzahl R eines Innenraumgebläses gemäß der Betriebsfrequenz F des Kompressors zu steuern,
   **dadurch gekennzeichnet, dass**
   wenn eine Temperaturdifferenz $\Delta t$ zwischen der Raumtemperatur t und einer vorgegebenen Temperatur T geringer als eine zweite vorgegebene Temperaturdifferenz $\Delta T2$ ist und die Raumluftfeuchtigkeit RH außerhalb eines Soll-Luftfeuchtigkeitsbereichs (RH1, RH2) liegt, die Bedingung erfüllt ist, wobei die zweite, vorgegebene Temperaturdifferenz $\Delta T2$ größer als Null ist, ferner **dadurch gekennzeichnet, dass**
   die Betriebsfrequenz F des Kompressors gemäß der folgenden Formel ermittelt wird:

$$F = RH\_Ki^x \Delta RH' + RH\_Kp^x \Delta RH,$$

   wobei $\Delta RH = RH - RH\_Target$, $\Delta RH' = RH - RHI$, RHI eine beim letzten Mal erfasste Raumluftfeuchtigkeit angibt, und RH_Ki und RH_Kp jeweils vorgegebene Gewichtungskoeffizienten sind; und
   ferner **dadurch gekennzeichnet, dass**
   die Drehzahl R des Innenraumgebläses gemäß der Betriebsfrequenz F des Kompressors und der folgenden Formel berechnet wird:

$$R = 15^x F + 50.$$

8. Vorrichtung nach Anspruch 7, bei welcher die MCU (503) ferner aufweist:

   eine erste Recheneinheit (601), die dazu ausgebildet ist, eine Temperaturdifferenz PT zwischen der Temperatur Tpn der Innenraumspule und einer Solltemperatur Tpm der Innenraumspule zu berechnen; und die Betriebsfrequenz F des Kompressors gemäß der Temperaturdifferenz PT und einer Temperaturänderung DT der Innenraumspule zu berechnen; und
   wobei die Einstelleinheit (5032) dazu ausgebildet ist, die Betriebsfrequenz F des Kompressors gemäß einem Berechnungsergebnis der ersten Recheneinheit (601) einzustellen.

9. Vorrichtung nach Anspruch 7, bei welcher die MCU (503) ferner aufweist:

   eine zweite Recheneinheit (701), die dazu ausgebildet ist, die Betriebsfrequenz F des Kompressors gemäß der Luftfeuchtigkeitsdifferenz $\Delta RH$ und einer Änderung $\Delta RH'$ der Raumluftfeuchtigkeit zu berechnen; und

wobei die Einstelleinheit (5032) dazu ausgebildet ist, die Betriebsfrequenz F des Kompressors gemäß einem Berechnungsergebnis der zweiten Recheneinheit (701) einzustellen.

10. Vorrichtung nach Anspruch 7, bei welcher, wenn die Temperaturdifferenz Δt zwischen der Raumtemperatur t und der vorgegebenen Temperatur T geringer als die zweite vorgegebene Temperaturdifferenz ΔT2 ist und die Raumluftfeuchtigkeit RH innerhalb des Soll-Luftfeuchtigkeitsbereichs (RH1, RH2) liegt, die Drehzahl R des Innenraumgebläses und die Betriebsfrequenz F des Kompressors unverändert belassen werden.

11. Vorrichtung nach Anspruch 10, bei welcher die Einstelleinheit (5032) ferner dazu ausgebildet ist, wenn die Temperaturdifferenz Δt zwischen der Raumtemperatur t und der vorgegebenen Temperatur T größer als oder gleich der zweiten vorgegebenen Temperaturdifferenz ΔT2 und geringer als eine erste vorgegebene Temperaturdifferenz ΔT1 ist, die Betriebsfrequenz F des Kompressors auf eine vorgegebene Frequenz f1 einzustellen.

12. Vorrichtung nach Anspruch 10 oder 11, bei welcher die Einstelleinheit (5032) ferner dazu ausgebildet ist, wenn die Temperaturdifferenz Δt größer als oder gleich der ersten vorgegebenen Temperaturdifferenz ΔT1 ist, die Betriebsfrequenz F des Kompressors und/oder die Drehgeschwindigkeit R des Innenraumgebläses zu verbessern, um die Raumtemperatur zu verringern.

13. Klimatisierungssystem, **dadurch gekennzeichnet, dass** es einen Kompressor und ein Innenraumgebläse aufweist, und ferner eine Vorrichtung zum Steuern der Klimaanlage nach einem der Ansprüche 7 bis 12 aufweist.

## Revendications

1. Procédé de commande d'un climatiseur comprenant ;

   la collecte (S101, S201) d'une température intérieure t et d'une humidité intérieure RH, lorsque le climatiseur est en mode refroidissement ; et
   la détermination (S102, S202) du fait de savoir si une condition est satisfaite en fonction de la température intérieure t et de l'humidité intérieure RH, et du fait de savoir si la condition est satisfaite, la commande d'une fréquence de fonctionnement F d'un compresseur en fonction d'une température Tpn d'une bobine intérieure ou de l'humidité intérieure RH, et le réglage d'une vitesse de rotation R d'un ventilateur intérieur selon la fréquence de fonctionnement F du compresseur,
   **caractérisé en ce que,** lorsqu'une différence de température Δt, entre la température intérieure t et une température spécifiée T, est inférieure à une seconde différence de température spécifiée ΔT2 et que l'humidité intérieure RH est à l'extérieur d'une plage d'humidité cible (RH1, RH2), la condition est satisfaite, la seconde différence de température spécifiée ΔT2 étant supérieure à zéro, **en ce que** la fréquence de fonctionnement F du compresseur est déterminée selon la formule suivante :

$$F = RH\_Ki \times \Delta RH' + RH\_Kp \times \Delta RH,$$

   ΔRH = RH-RH_Target, ΔRH' = RH-RH1, RH1 étant une humidité intérieure collectée une dernière fois, et RH_Ki et RH_Kp étant des coefficients de pondération spécifiés respectivement ; et
   **en ce que** la vitesse de rotation R du ventilateur intérieur est calculée selon la fréquence de fonctionnement F du compresseur et la formule suivante :

$$R = 15 \times F + 50.$$

2. Procédé selon la revendication 1, dans lequel la commande (S101, S201) de la fréquence de fonctionnement F du compresseur en fonction de la température Tpn de la bobine intérieure comprend :

   le calcul (S301) d'une différence de température PT entre la Tpn de température de la bobine intérieure et une température cible Tpm de la bobine intérieure ; et
   le calcul et le réglage (S301) de la fréquence de fonctionnement F du compresseur en fonction de la différence de température PT et d'un changement de température DT de la bobine intérieure.

3. Procédé selon la revendication 1, dans lequel la commande (S102, S202) de la fréquence de fonctionnement F du compresseur selon l'humidité intérieure RH comprend :
   le calcul et le réglage (S401) de la fréquence de fonctionnement F du compresseur en fonction de la différence d'humidité ΔRH et d'un changement ΔRH' de l'humidité intérieure.

4. Procédé selon la revendication 1, comprenant en outre : lorsque la différence de température Δt entre la température intérieure t et la température spécifiée T est inférieure à la seconde différence de température spécifiée ΔT2 et l'humidité intérieure RH se situe dans la plage d'humidité cible (RH1, RH2), le maintien (S302, S402) de la vitesse de rotation R du ventilateur intérieur et de la fréquence de fonctionnement F du compresseur, de façon à ce qu'elles restent inchangées.

5. Procédé selon la revendication 4, comprenant en outre : lorsque la différence de température Δt entre la température intérieure t et la température spécifiée T est supérieure ou égale à la seconde différence de température spécifiée ΔT2 et inférieure à une première différence de température spécifié ΔT1, le réglage (S303, S403) de la fréquence de fonctionnement F du compresseur à une fréquence spécifiée fl.

6. Procédé selon la revendication 4 ou 5, comprenant en outre : lorsque la différence de température Δt est supérieure ou égale à la première différence de température spécifiée ΔT1, l'amélioration (S304, S404) de la fréquence de fonctionnement F du compresseur et/ou de la vitesse de rotation R du ventilateur intérieur pour réduire la température intérieure.

7. Dispositif de commande d'un climatiseur comprenant un premier capteur de température (501) pour collecter une température intérieure t, un capteur d'humidité (502) pour collecter une humidité intérieure RH, et une unité de microcontrôleur MCU (503), la MCU (503) comprenant :

   une unité de détermination (5031) configurée pour déterminer le fait de savoir si une condition est satisfaite en fonction de la température intérieure t collectée par le premier capteur de température (501) et de l'humidité intérieure RH collectée par le capteur d'humidité (502), lorsque le climatiseur est en mode refroidissement ; et
   une unité de réglage (5032) configurée pour, lorsque l'unité de détermination (5031) détermine que la condition est satisfaite, commander une fréquence de fonctionnement F d'un compresseur en fonction d'une température Tpn d'une bobine intérieure et de l'humidité intérieure RH, et le réglage d'une vitesse de rotation R d'un ventilateur intérieur selon la fréquence de fonctionnement F du compresseur,
   **caractérisé en ce que,** lorsqu'une différence de température Δt entre la température intérieure t et une température spécifiée T est inférieure à une seconde différence de température spécifiée ΔT2 et l'humidité intérieure RH est à l'extérieur d'une plage d'humidité cible (RH1, RH2), la condition est satisfaite, la seconde différence de température spécifiée ΔT2 étant supérieure à zéro,
   en outre, **caractérisé en ce que** la fréquence de fonctionnement F du compresseur est déterminée selon la formule suivante :

$$F = RH\_Ki \times \Delta RH' + RH\_Kp \times \Delta RH,$$

   ΔRH = RH-RH_Target, ΔRH' = RH-RH1, RH1 étant une humidité intérieure collectée une dernière fois, et RH_Ki et RH_Kp étant des coefficients de pondération spécifiés respectivement ; et
   en outre, **caractérisé en ce que** la vitesse de rotation R du ventilateur intérieur est calculée selon la fréquence de fonctionnement F du compresseur et la formule suivante :

$$R = 15 \times F + 50.$$

8. Dispositif selon la revendication 7, dans lequel la MCU (503) comprend en outre :

   une première unité de calcul (601) configurée pour calculer une différence de température PT entre la température Tpn de la bobine intérieure et une température cible Tpm de la bobine intérieure ; et le calcul de la fréquence de fonctionnement F du compresseur en fonction de la différence de température PT et d'un changement de température DT de la bobine intérieure, et
   l'unité de réglage (5032) est configurée pour régler la fréquence de fonctionnement F du compresseur en fonction d'un résultat de calcul de la première unité de calcul (601).

**9.** Dispositif selon la revendication 7, dans lequel la MCU (503) comprend en outre :

une seconde unité de calcul (701) configurée pour calculer la fréquence de fonctionnement F du compresseur en fonction de la différence d'humidité $\Delta$RH et d'un changement $\Delta$RH de l'humidité intérieure ; et l'unité de réglage (5032) est configurée pour régler la fréquence de fonctionnement F du compresseur en fonction d'un résultat de calcul de la seconde unité de calcul (701).

**10.** Dispositif selon la revendication 7, dans lequel, lorsque la différence de température $\Delta$t entre la température intérieure t et la température spécifiée T est inférieure à la seconde différence de température spécifiée $\Delta$T2 et l'humidité intérieure RH se situe dans la plage d'humidité cible (RH1, RH2), la vitesse de rotation R du ventilateur intérieur et la fréquence de fonctionnement F du compresseur restent inchangées.

**11.** Dispositif selon la revendication 10, dans lequel l'unité de réglage (5032) est en outre configurée pour, lorsque la différence de température $\Delta$t entre la température intérieure t et la température spécifiée T est supérieure ou égale à la seconde différence de température spécifiée $\Delta$T2 et inférieure à une première différence de température spécifiée $\Delta$T1, régler la fréquence de fonctionnement F du compresseur à une fréquence déterminée f1.

**12.** Dispositif selon la revendication 10 ou 11, dans lequel l'unité de réglage (5032) est en outre configurée pour, lorsque la différence de température $\Delta$t est supérieure ou égale à la première différence de température spécifiée $\Delta$T1, améliorer la fréquence de fonctionnement F du compresseur et/ou la vitesse de rotation R du ventilateur intérieur pour réduire la température intérieure.

**13.** Système de climatisation, **caractérisé en ce que**, comprenant un compresseur et un ventilateur intérieur, et comprenant en outre un dispositif de commande du climatiseur selon l'une quelconque des revendications 7 à 12.

| S101 |
|---|
| Indoor temperature t and an indoor humidity RH are collected when the air conditioner is in a cooling mode |

↓

| S102 |
|---|
| Whether a condition is satisfied is determined according to the indoor temperature t and the indoor humidity RH, and if the condition is satisfied, an operating frequency F of a compressor is controlled according to a temperature Tpn of an indoor coil, and a rotational speed R of an indoor fan is adjusted according to the operating frequency F of the compressor |

Fig. 1

| S201 |
|---|
| Indoor temperature t and an indoor humidity RH are collected when the air conditioner is in a cooling mode |

↓

| S202 |
|---|
| Whether a condition is satisfied is determined according to the indoor temperature t and the indoor humidity RH, and if the condition is satisfied, an operating frequency F of a compressor is controlled according to the indoor humidity RH, and a rotational speed R of an indoor fan is adjusted according to the operating frequency F of the compressor |

Fig. 2

Fig. 3

Fig. 4

Fig. 5

Fig. 6

Fig. 7

**EP 3 677 850 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006329471 A

- CN 104969010 A